# EUROPEAN PATENT APPLICATION

(11) **EP 4 393 796 A1**
(43) Date of publication of application: **03.07.2024**
(21) Application number: 23219830.9
(22) Date of filing: 22.12.2023
(51) Int. Cl.: B62D 35/00, B62D 37/02, B60K 11/06, B62D 35/02

(54) **VEHICLE COMPRISING A BOTTOM PLATE WITH A MOVABLE SECTION**

(30) Priority: 27.12.2022 NL 2033854
(71) Applicant: DAF Trucks N.V., 5643 TW Eindhoven (NL)
(72) Inventor: VAN DEN HEIJKANT, Rob Adrianus Johannes, 5643 TW Eindhoven (NL); BEENAKKERS, Menno Adrianus, 5643 TW Eindhoven (NL); RENTEMA, Date Willem Egbert, 5643 TW Eindhoven (NL); TOPPINGA, Reinier, 5643 TW Eindhoven (NL); VAN LIEROP, Franciscus Petrus Henricus Maria, 5643 TW Eindhoven (NL)
(74) Representative: V.O.

(57) **Abstract**

A vehicle to be driven on a driving surface, comprising an engine cooling system with a grille, a radiator, and a fan. A bottom plate extends along a lower surface of the vehicle for covering the radiator. The bottom plate comprises a movable section coupled to an actuator mechanism for adjusting a ground clearance. The engine cooling system comprises flow guides mounted between the grille and the radiator, and an anti-recirculation cover mounted between the radiator and the bottom plate. The movable section is pivotable around a pivot axis directly downstream of the anti-recirculation cover. A controller is configured to control the actuator mechanism to adjust the ground clearance in dependence of a driving velocity.

## Description

The invention relates to a vehicle comprising a bottom plate with a movable section.

Vehicles are predominantly provided with a minimum ground clearance, between the lower surface of the vehicle and the road surface, to account for irregularities in different types of road surfaces the vehicle is to be driven on during normal operating conditions. For example, the vehicle may encounter road irregularities which are related to maneuvering at low driving speeds, such as speed ramps, curbsides during cornering, and entering and exiting ferries or steep slopes. need to be driven on roads that are in relatively poor condition, e.g. streets comprising bumps or holes, as well as on roads that are in relatively good condition, such as freeways or highways. To improve the accessibility of the vehicle, the minimum ground clearance may be set to be suitable for driving on the worst type of road irregularities to be encountered, e.g. at low driving speeds. However, when driving at high speed on a freeway, it is desirable to decrease aerodynamic drag, and thus improve the fuel efficiency of the vehicle.

It is known in the art to equip a vehicle with a movable bottom plate which, effectively, controls the ground clearance of the vehicle. However, such movable bottom plates modify the internal (underhood) airflow, thereby affecting the engine cooling performance of the vehicle.

It is an object of the present invention to provide a vehicle, in which the ground clearance can be controlled without affecting engine cooling performance.

### SUMMARY

In summary, the invention pertains to a vehicle to be driven on a driving surface. The vehicle comprises an engine cooling system, a bottom plate, a movable air deflector and an actuator mechanism.

The engine cooling system comprises in a downstream direction a grille, a radiator, and a fan. The grille is provided at a front side of the vehicle for receiving an airflow. The airflow is able to pass along heat exchange surfaces of the radiator for cooling the radiator. The fan is arranged for increasing the airflow.

The bottom plate extends from the front side along a lower surface of the vehicle and is arranged for covering at least the radiator. A ground clearance is defined between the bottom plate and the driving surface. The bottom plate comprises a movable section arranged for adjusting the ground clearance. The movable section is pivotable between a first position, wherein the movable section extends substantially along the lower surface, and a second position wherein the movable section extends towards the driving surface.

The actuator mechanism is coupled to the movable section and configured to drive the movable section between the first position and the second position.

The engine cooling system comprises flow guides mounted between the grille and the radiator, for guiding the airflow towards the radiator, and an anti-recirculation cover mounted between the radiator and the bottom plate, for minimalizing recirculation of heated airflow.

The movable section is pivotable around a pivot axis oriented transverse to the downstream direction and provided directly downstream of the anti-recirculation cover.

The vehicle further comprises a controller configured to control the actuator mechanism to adjust the ground clearance in dependence of a driving velocity of the vehicle.

In this way, the ground clearance of the vehicle can e.g. be decreased when the vehicle is driven on a relatively even driving surfaces such as freeways or highways, to improve the fuel efficiency of the vehicle, without affecting the cooling performance of the engine cooling system.

In the second position, the movable section or a trailing edge thereof, is relatively close to the driving surface, and the turbulent airflow below the vehicle reduces the aerodynamic drag on components on the vehicle downstream of the movable section. As a result, the fuel efficiency of the vehicle is improved.

Conversely, the ground clearance can e.g. be increased when the vehicle is driven on relatively uneven driving surfaces, such as local streets e.g. comprising speed bumps, to improve the manoeuvrability and itinerary options of the vehicle.

The location of the pivot axis, or the split between the bottom plate and the moveable section, is not arbitrary. The flow guides and anti-recirculation cover ensure that a maximum amount of the airflow entering the grille will pass along the heat exchange surfaces of the radiator, e.g. by creating an airtight compartment between the grille and the radiator. As a result, a maximum cooling performance can be achieved with the lowest vehicle air drag in 'cruising' conditions, such as during highway driving. By minimizing the recirculation of heated airflow re-entering the radiator in high-load conditions, such as during up-hill driving at low speed, the cooling performance can be improved.

To ensure the effectiveness of the flow guides and anti-recirculation covers, while minimizing aerodynamic drag on downstream components of the vehicle in the second position of the movable section, the pivot axis or split is provided directly downstream of the anti-recirculation cover. Also, the effectiveness of any additional anti-recirculation covers, e.g. between the radiator and the bottom-plate, can be maintained, since they are connected to the fixed part of the bottom-plate.

In some embodiments, the controller is configured to control the actuator mechanism to move the movable section from the first position towards the second position when the driving velocity exceeds a first threshold value, and to move the movable section from the second position towards the first position when the driving velocity exceeds a second threshold value. By comparing the driving velocity with the first and second threshold value, it can be determined what type of road the vehicle is being driven on, to determine whether the ground clearance is to be increased or decreased. For example, the first and/or second threshold value may be in a range of 60-130 kph. Such a driving velocity would most likely be reached on roads with a relatively even driving surface. As another example, roads that are to be driven at driving velocities between 0-80 kph may have a higher chance of comprising uneven surfaces. Hence, the first and/or second threshold may be in a range of 60-80 kph, to cover the transition between driving speeds representative of uneven road surfaces and driving speeds representative of even road surfaces.

Preferably, to prevent too frequent movement of the bottom plate, the first threshold value must be larger than the second threshold value. For example, the first threshold value may be in a range of 70-90 kph, more preferably 70-80 kph, and the second threshold value may be in a range of 50-70 kph, more preferably 60-70 kph.

The controller may for example be configured to control the actuator mechanism to move the movable section between the first and second position along a maximum pivot angle ranging between 5-30 degrees, preferably between 10-20 degrees. This range depends on the length (in X-direction) of the moveable part (smaller angles for longer parts) and the geometry in the lower region of the vehicle.

Alternatively, instead of the angle, the Z-distance of the trailing edge can be described. (This was our design parameter.) This Z-distance ranges between 2 and 10cm, preferably between 4 and 8 cm. This range depends on the geometry in the lower region of the vehicle. In this way, the airflow below the vehicle can be facilitated or guided by the movable section to reduce stagnation on downstream components of the vehicle, without increasing the total amount of drag, which, in turn, may adversely affect fuel efficiency.

In other or further embodiments, the controller is configured to adjust the ground clearance based on a geographic location of the vehicle. For example, the controller may be triggered by a signal that is based on a GPS signal, e.g. in combination with geographical location data from a database or lookup table, which may include road characteristics, such as road irregularities. Accordingly, the driving velocity at which the movable section is pivoted from the first towards the second position, and vice versa, can be adjusted in dependence of actual road characteristics at geographic locations.

To guide or facilitate the airflow below the vehicle, the movable section may comprise a bottom side facing the driving surface, wherein the bottom side is provided with one or more grooves extending along the downstream direction. Alternatively to the one or more grooves, or additionally, other types of elements may be provided in or on the bottom side of the movable section to create turbulent airflow, such as protrusions, fins, ribs, notches, cavities, stepped or angled surfaces, and/ or jagged edges.

In some embodiments, the movable section comprises a leading edge mounted adjacent to a trailing edge of the bottom plate, and the pivot axis is provided downstream of the leading edge of the movable section. In this way, the gap between the bottom plate and the moveable section is kept small during a pivoting movement of the moveable section. As a result, secondary airflow entering the gap and contaminating the engine cooling system is limited. Such secondary airflow may for example comprise dirt or water particles, e.g. sprayed from the road surface or wheels of the vehicle, and could damage or wear out the engine cooling system or other parts of the vehicle.

Preferably, the movable section defines an outlet in the lower surface for venting out heated air from the engine cooling system, wherein the outlet is dimensioned to maximize the airflow through the radiator, to maximize the cooling performance of the engine cooling system. For example, the outlet may be dimensioned to allow a maximum outflow of air producible by the fan when the movable section is substantially aligned with the lower surface in the first position. The shape and/or dimensions of the outlet can e.g. be defined by a trailing edge of the movable section.

In some embodiments, the actuator mechanism comprises one or more linear actuators mounted between the lower surface and a trailing edge of the movable section, wherein the one or more linear actuators are arranged for pivoting the trailing edge around the pivot axis between the first position and the second position. For example, hydraulic or pneumatic actuators may be arranged between the lower surface and the trailing surface, or spindle drives.

### BRIEF DESCRIPTION OF THE DRAWINGS

The invention will be further elucidated in the figures:
FIG 1 illustrates an embodiment of a vehicle comprising a bottom plate with a movable section;
FIG 2 illustrates an isometric view of another or further embodiment of a vehicle as described herein;
FIGs 3A and 3B provide a schematic representation of another or further embodiment of a bottom plate as described herein;
FIG 4 provides an isometric top view of another or further embodiment of a bottom plate as described herein;
FIG 5 provides an isometric bottom view of another or further embodiment of a vehicle as described herein.

### DETAILED DESCRIPTION

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

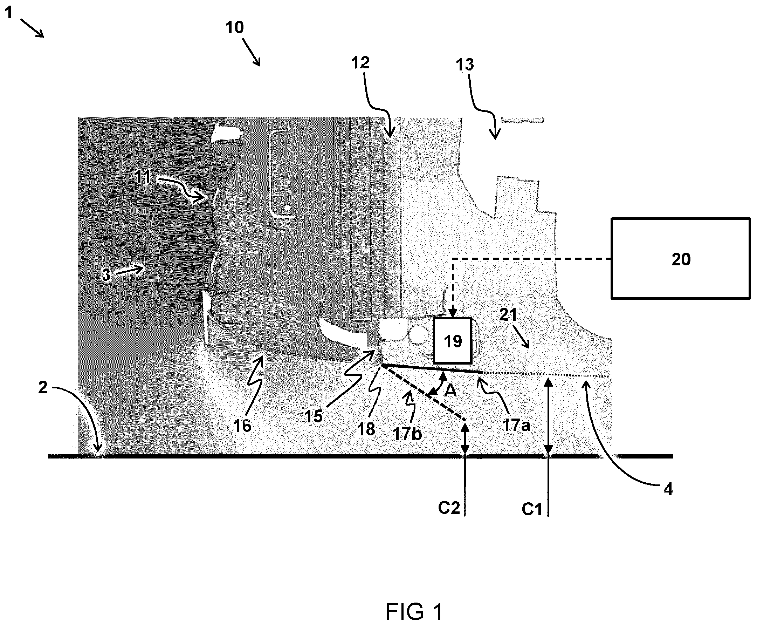

FIG 1 represents an embodiment of a vehicle 1, e.g. a commercial vehicle such as a truck or bus, or a passenger vehicle, to be driven on a driving surface 2. The vehicle has an engine cooling system 10, for cooling the engine, or electric motor, of the vehicle 1. In a downstream direction D of the vehicle 1, the engine cooling system 10 comprises a grille 11, a radiator 12, and a fan 13. The grille 11 is provided at a front side 3 of the vehicle 1 for receiving an airflow, e.g. when the vehicle 1 is driven along the driving surface 2. The airflow is able to pass along heat exchange surfaces of the radiator 12 for cooling the radiator, for thereby cooling coolant medium of the engine flowing through the radiator 12. The engine cooling system 10 may additionally comprise a condenser and intercooler between the grille 11 and the radiator 12. The condenser, intercooler and radiator may also be referred to as "cooling modules". The fan 13 is arranged for increasing the airflow, e.g. when the ramp air is not enough to provide the required cooling airflow and/or when more cooling performance or airflow is required.

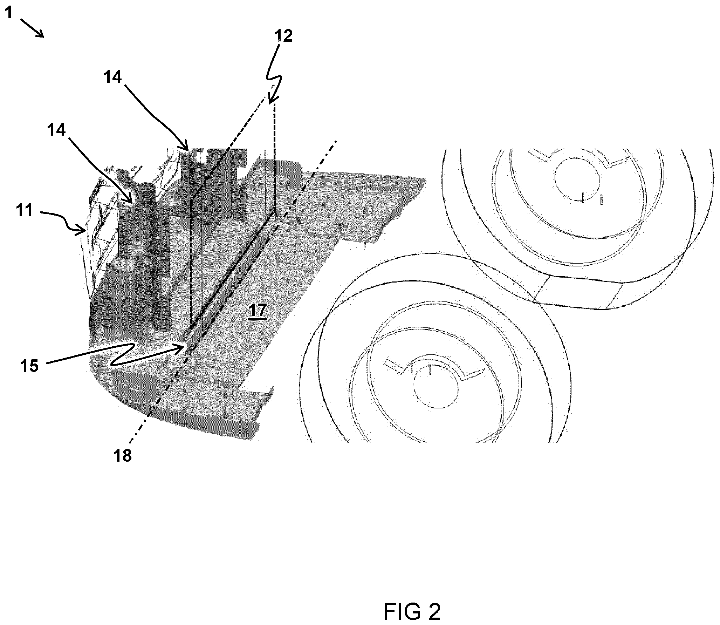

As illustrated in FIG 2, the engine cooling system 10 further comprises flow guides 14 mounted between the grille 11 and the radiator 12, for guiding the airflow towards the radiator 12, and an anti-recirculation cover 15, for minimizing recirculation of heated airflow. Additional anti-recirculation covers and flow guides may be mounted between the grille 11 and the radiator 12, to create an air channel between the grille and radiator. By having the air channel as airtight as possible, the efficiency of the cooling system can be optimized. The one or more anti-recirculation covers minimize the recirculation of heated airflow.

Back to FIG 1, it is shown that the anti-recirculation cover 15 connects the radiator 12 with a bottom plate 16, that extends from the front side 3 along a lower surface 4 of the vehicle 1 and covers the radiator 12. The bottom plate 16 may also be arranged for covering other components of the vehicle 1. The bottom plate 16 may extend as far downstream as possible without blocking the outflow of the fan. Between the bottom plate 16 and the driving surface 2, a ground clearance C is defined. The bottom plate 16 comprises a movable section 17 arranged for adjusting the ground clearance C. The movable section 17 is pivotable between a first position 17a and a second position 17b, around a pivot axis 18 oriented transverse to the downstream direction D and provided downstream of the anti-recirculation cover 15. Preferably, the pivot axis 18 is provided directly downstream of the anti-recirculation cover 15, e.g. within a range of 0-30 centimeters, preferably within 0-5 centimeters, in the downstream direction, as can also be seen in FIG 2. In this way, the effectiveness of the flow guides and anti-recirculation covers can be ensured, since the compartment between the grille 11 and the radiator is sealed in an airtight fashion, while the aerodynamic drag on components of the vehicle downstream of the movable section 17 is minimized.

An actuator mechanism 19, controlled by a controller 20, is coupled to the movable section 17 to drive the movable section 17 between the first and second position 17a, 17b, dependent of a driving velocity of the vehicle 1. In the first position 17a, the movable section extends substantially along the lower surface 4, e.g. corresponding to a first ground clearance C1. In the second position 17b, the movable section extends towards the driving surface 2, e.g. at an angle A from the lower surface 4, corresponding to a second ground clearance C2. In the second position 17b, the movable section guides or facilitates a turbulent airflow below the vehicle 1, e.g. when the vehicle is driven.

The movable section 17 may define an outlet 21 in the lower surface 4, downstream of the movable section 17. The outlet 21 may be dimensioned to maximize an outflow of air through the radiator 12, or a maximum outflow of air producible by the fan 13, to maximize the cooling performance of the engine cooling system 10. For example, the outlet 21 may be dimensioned such that, in the first position 17a, the outflow of air from the fan 13 towards the driving surface 2 is minimally restrained.

The controller 20 may be configured to control the actuator mechanism 19 to move the movable section from the first position 17a towards the second position 17b when the driving velocity exceeds a first threshold value, and to move the movable section from the second position 17b towards the first position 17a when the driving velocity exceeds a second threshold value. Preferably, the first threshold value is larger than the second threshold value, to prevent too frequent movement of the movable section 17. For example, the first threshold value can be in a range of 70-80 kph, and the second threshold value can be in a range of 60-70 kph.

The controller 20 may further be configured to control the actuator mechanism 19 to move the movable section between the first and second position 17a, 17b along a maximum pivot angle A, e.g. the angle between the movable section 17 in the second position 17b and the lower surface 4. The maximum pivot angle A may range between 5-30 degrees, preferably between 10-20 degrees, guide the turbulent flow below the vehicle 1 while decreasing the total amount of drag of the vehicle 1. A pivot angle A smaller than 5 degrees has little to no effect on the reduction of fuel consumption, while a pivot angle A larger than 60 degrees may create a relatively large amount of drag and thus adversely affect fuel consumption.

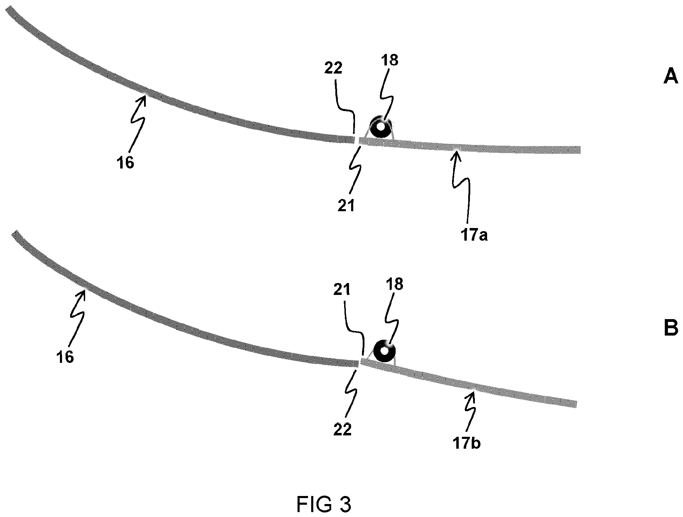

FIGs 3A and B provide a schematic representation of another or further embodiment of a bottom plate 16 as described herein. The movable section 17 comprises a leading edge 21 mounted adjacent to a trailing edge 22 of the bottom plate 16, and wherein the pivot axis 18 is provided downstream of the leading edge 21 of the movable section. In this way, the gap between the bottom plate 16 and the movable section 17 can be minimalized, and kept small during a pivoting movement of the movable section 17 between the first and second position 17a, 17b. Since the leading edge 21 of the movable section 17 is above the trailing edge 22 of the bottom plate 16, the flow of air and dirt entering the underhood compartment from the outside is minimized. Suspension of the movable section 17 to the pivot axis 18 can e.g. be provided by means of a shaft or rod ends, (dry) friction bearings, planar bearings, elastic hinges, or ball or roller bearings.

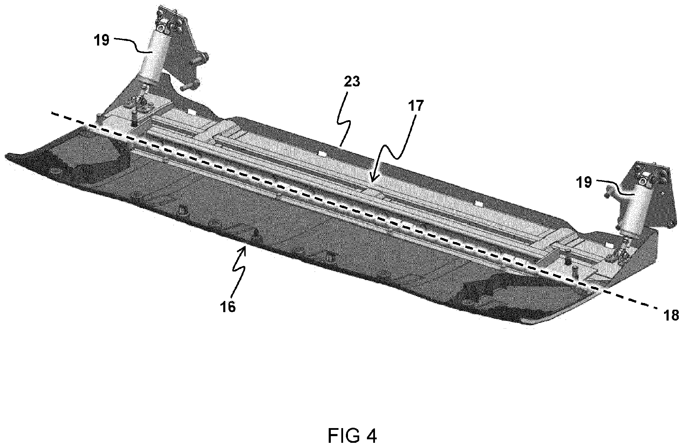

FIG 4 illustrates an isometric top view of another or further embodiment of a bottom plate 16 as described herein. The movable section 17 is depicted in the first position. An actuator mechanism 19 comprising a pair of linear actuators, e.g. hydraulic or pneumatic (piston) actuators is mounted between the lower surface and the trailing edge 23 of the movable section 17. The pair of linear actuators are arranged for pivoting the trailing edge 23 around the pivot axis 18 between the first position and the second position of the movable section 17.

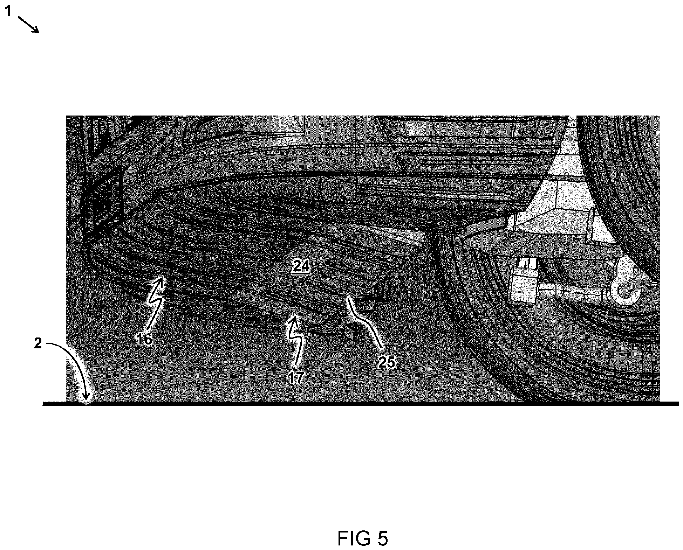

FIG 5 illustrates an isometric bottom view of another or further embodiment of a vehicle 1 as described herein, showing the bottom plate 16 with the movable section 17 in the second position, extending toward the driving surface 2. The movable section 17 comprises a bottom side 24 facing the driving surface 2. As illustrated, the bottom side 24 may be profiled, or provided with a number of grooves extending along the downstream direction. This allows fixation means, such as bolts, e.g. between the movable section and the actuation mechanism, to be mounted inside the grooves to prevent the fixation means sticking out of the bottom side and influence the airflow below the vehicle and/or the ground clearance, e.g. when the movable section is pivoted in the second position.

It is thus believed that the operation and construction of the present invention will be apparent from the foregoing description and drawings appended thereto. For the purpose of clarity and a concise description features are described herein as part of the same or separate embodiments, however, it will be appreciated that the scope of the invention may include embodiments having combinations of all or some of the features described.

The invention applies not only to automotive applications where the bottom plate is used for controlling the ground clearance of the vehicle, but also to other applications where a bottom plate is used. It will be clear to the skilled person that the invention is not limited to any embodiment herein described and that modifications are possible which may be considered within the scope of the appended claims. Also kinematic inversions are considered inherently disclosed and can be within the scope of the invention. In the claims, any reference signs shall not be construed as limiting the claim.

The terms 'comprising' and 'including' when used in this description or the appended claims should not be construed in an exclusive or exhaustive sense but rather in an inclusive sense. Thus expression as 'including' or 'comprising' as used herein does not exclude the presence of other elements, additional structure or additional acts or steps in addition to those listed. Furthermore, the words 'a' and 'an' shall not be construed as limited to 'only one', but instead are used to mean 'at least one', and do not exclude a plurality. Features that are not specifically or explicitly described or claimed may additionally be included in the structure of the invention without departing from its scope.

Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. To the extent that structure, material, or acts are considered to be essential they are inexpressively indicated as such. Additions, deletions, and modifications within the purview of the skilled person may generally be made without departing from the scope of the invention, as determined by the claims.

## Claims

1. A vehicle to be driven on a driving surface, comprising:
- an engine cooling system, comprising in a downstream direction:
∘ a grille provided at a front side of the vehicle for receiving an airflow;
∘ a radiator, wherein the airflow is able to pass along heat exchange surfaces of the radiator for cooling the radiator; and
∘ a fan, for increasing the airflow;
- a bottom plate extending from the front side along a lower surface of the vehicle and arranged for covering at least the radiator; a ground clearance being defined between the bottom plate and the driving surface, wherein the bottom plate comprises a movable section arranged for adjusting the ground clearance, wherein the movable section is pivotable between a first position, wherein the movable section extends substantially along the lower surface, and a second position wherein the movable section extends towards the driving surface; and
- an actuator mechanism coupled to the movable section and configured to drive the movable section between the first and second position;
wherein the engine cooling system comprises flow guides mounted between the grille and the radiator, for guiding the airflow towards the radiator, and an anti-recirculation cover mounted between the radiator and the bottom plate, for minimalizing recirculation of heated airflow;
wherein the movable section is pivotable around a pivot axis oriented transverse to the downstream direction and provided directly downstream of the anti-recirculation covers; and wherein the vehicle comprises a controller configured to control the actuator mechanism to adjust the ground clearance in dependence of a driving velocity of the vehicle.

2. Vehicle according to claim 1, wherein the controller is configured to control the actuator mechanism to move the movable section from the first position towards the second position when the driving velocity exceeds a first threshold value, and to move the movable section from the second position towards the first position when the driving velocity exceeds a second threshold value.

3. Vehicle according to claim 2, wherein the first threshold value is larger than the second threshold value.

4. Vehicle according to any preceding claim, wherein the controller is configured to adjust the ground clearance based on a geographic location of the vehicle.

5. Vehicle according to any preceding claim, wherein the controller is configured to control the actuator mechanism to move the movable section between the first and second position along a maximum pivot angle ranging between 5-30 degrees, preferably between 10-20 degrees.

6. Vehicle according to any preceding claim, wherein the movable section comprises a leading edge mounted adjacent to a trailing edge of the bottom plate, and wherein the pivot axis is provided downstream of the leading edge of the movable section.

7. Vehicle according to any preceding claim, wherein the movable section comprises a bottom side facing the driving surface, wherein the bottom side is provided with one or more grooves extending along the downstream direction.

8. Vehicle according to any preceding claim, wherein the movable section defines an outlet in the lower surface for venting out heated air from the engine cooling system, wherein the outlet is dimensioned to maximize an outflow of air through the radiator.

9. Vehicle according to any preceding claim, wherein the actuator mechanism comprises one or more linear actuators mounted between the lower surface and a trailing edge of the movable section, wherein the one or more linear actuators are arranged for pivoting the trailing edge around the pivot axis between the first position and the second position.
